# EUROPEAN PATENT APPLICATION

(11) **EP 4 472 317 A1**
(43) Date of publication of application: **04.12.2024**
(21) Application number: 23746183.5
(22) Date of filing: 18.01.2023
(51) Int. Cl.: H04W 72/04

(54) **SYSTEM INFORMATION SENDING AND RECEIVING METHOD, DEVICE, AND STORAGE MEDIUM**

(30) Priority: 30.01.2022 CN 202210114405
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: LI, Nan, Beijing 100032 (CN); CHEN, Ningyu, Beijing 100032 (CN); DING, Haiyu, Beijing 100032 (CN); LIU, Liang, Beijing 100032 (CN); TANG, Xiaoxuan, Beijing 100032 (CN); WU, Xin, Beijing 100032 (CN); SHAO, Hua, Beijing 100032 (CN); JIANG, Xin, Beijing 100032 (CN)
(74) Representative: Maiwald GmbH
(86) International application number: PCT/CN2023/072875
(87) International publication number: WO 2023/143302

(57) **Abstract**

The present disclosure discloses a system information sending and receiving method, a device, and a storage medium. The method comprises: a network side sending first system information to a terminal, the first system information comprising first information of a second system information group, and the first information comprising one or a combination of the following items of information: an indication of a control information aggregation level of second system information, a number of MIMO streams of the second system information, an effective area of the second system information, an effective time of the second system information, receiving condition information of the second system information, a modulation mode of the second system information, a subcarrier interval for sending the second system information, a sending period of the second system information, and a number of repetitions for sending the second system information; the network side sending the second system information group to the terminal according to the first information. The terminal receives the second system information group sent by the network side according to the first information

## Description

### CROSS-REFERENCE TO RELATED APPLICATION

This application is based upon and claims priority to Chinese Patent Application No. 202210114405.2, filed with the State Intellectual Property Office of P. R. China on January 30, 2022, the entire contents of which are incorporated herein by reference.

### TECHNICAL FIELD

The disclosure relates to a field of communication technologies, and more particularly to a method and an apparatus for sending system information, a method and an apparatus for receiving system information, and a storage medium.

### BACKGROUND

In the related art, configuration information of positioning system information can be sent through a system information block 1 (SIB 1). The configuration information refers to a sending period, a mapping mode and the like of the positioning system information.

A disadvantage in the related art is that: sending the positioning system information by using a modulation mode and a number of multiple input multiple output (MIMO) streams of ordinary system information may cause a greater overhead.

### SUMMARY

The disclosure provides a method and an apparatus for sending system information, a method and an apparatus for receiving system information, and a storage medium, to solve a problem that sending positioning system information by using a modulation mode and the number of MIMO streams of the common system information cause a greater overhead.

The disclosure provides following technical solutions.

A method for sending system information includes:
sending, by a network side, first system information to a terminal, in which the first system information includes first information of a group of second system information, and the first information includes one or a combination of: an indication of a control information aggregation level of the second system information, a number of MIMO streams of the second system information, a valid area of the second system information, valid time of the second system information, receiving condition information of the second system information, a MCS index indicating a modulation and coding scheme of a PDCCH or a PDSCH of the second system information, a modulation mode of the second system information, a subcarrier spacing for sending the second system information, a sending period of the second system information, encrypted information of the second system information, an encrypted public key of the second system information, and a number of sending repetitions of the second system information; and
sending, by the network side, the group of second system information to the terminal based on the first information.

In embodiments, the receiving condition information of the second system information includes: an RSRP threshold and/or a TA threshold.

In the embodiments, before sending, by the network side, the first system information to the terminal, the method further includes:
receiving a request message of the system information or terminal auxiliary information sent by the terminal.

In the embodiments, the request message of the system information or terminal auxiliary information includes one or a combination of:
the system information requested by the terminal;
an MCS requested by the terminal;
a control channel element (CCE) aggregation level requested by the terminal;
a modulation order request requested by the terminal;
the subcarrier spacing for sending the second system information requested by the terminal;
the sending period for sending the second system information requested by the terminal;
an encrypted mode of the second system information requested by the terminal; and
the number of sending repetitions of the second system information requested by the terminal.

In the embodiments, the method further includes:
configuring, by the network side, the first information based on the request message of the system information or the terminal auxiliary information.

In the embodiments, configuring the first information based on the request message of the system information or the terminal auxiliary information includes:
configuring the system information for sending requested by the terminal;
configuring an MCS as a minimum MCS in multiple MCS sent by multiple terminals;
configuring a CCE aggregation level as a maximum CCE aggregation level in multiple CCE aggregation level requests sent by the multiple terminals;
configuring a modulation order as a minimum modulation order in multiple modulation orders sent by the multiple terminals;
configuring a subcarrier spacing for sending the second system information requested by the terminal;
configuring a sending period for sending the second system information requested by the terminal;
configuring an encrypted mode of the second system information requested by the terminal; and
configuring a number of sending repetitions for sending the second system information requested by the terminal.

A method for receiving system information includes:
receiving, by a terminal, first system information sent by a network side, in which the first system information includes first information of a group of second system information, and the first information includes one or a combination of: an indication of a control information aggregation level of the second system information, a number of MIMO streams of the second system information, a valid area of the second system information, valid time of the second system information, receiving condition information of the second system information, an MCS index indicating a modulation and coding scheme of a PDCCH or a PDSCH of the second system information, a modulation mode of the second system information, a subcarrier spacing for sending the second system information, a sending period of the second system information, encrypted information of the second system information, an encrypted public key of the second system information, and a number of sending repetitions of the second system information; and
receiving, by the terminal, the group of second system information sent by the network side based on the first information.

In the embodiments, the receiving condition information of the second system information includes: an RSRP threshold and/or a TA threshold.

In the embodiments, the method further includes:
receiving, by the terminal, the second system information when an RSRP measured by the terminal exceeds the RSRP threshold; and/or
receiving, by the terminal, the second system information when a TA of the terminal is lower than the TA threshold

In the embodiments, before receiving, by the terminal, the first system information sent by the network side, the method further includes:
sending, by the terminal, a request message of the system information or terminal auxiliary information to the network side.

In the embodiments, the request message of the system information or terminal auxiliary information includes one or a combination of:
system information requested by the terminal;
an MCS requested by the terminal;
a CCE aggregation level requested by the terminal;
a modulation order request requested by the terminal;
a subcarrier spacing for sending the second system information requested by the terminal;
a sending period for sending the second system information requested by the terminal;
an encrypted mode of the second system information requested by the terminal; and
a number of sending repetitions of the second system information requested by the terminal.

In the embodiments, after sending the request message of the system information or the terminal auxiliary information to the network side, the method further includes:
receiving the first information of the group of second system information sent by the network side, entering a connection state when the first system information is not received, and sending the request message of the system information or the terminal auxiliary information to the network side.

In the embodiments, after receiving, by the terminal, the first system information sent by the network side, the method further includes:
determining whether to receive the second system information based on the receiving condition information of the second system information in the first information.

A network side device includes:
a processor is configured to read a program in a memory to execute:
sending first system information to a terminal, in which the first system information includes first information of a group of second system information, and the first information includes one or a combination of: an indication of a control information aggregation level of the second system information, a number of MIMO streams of the second system information, a valid area of the second system information, valid time of the second system information, receiving condition information of the second system information, an MCS index indicating a modulation and coding scheme of a PDCCH or a PDSCH of the second system information, a modulation mode of the second system information, a subcarrier spacing for sending the second system information, a sending period of the second system information, encrypted information of the second system information, an encrypted public key of the second system information, and a number of sending repetitions of the second system information; and
sending the group of second system information to the terminal based on the first information;
a transceiver is configured to receive and send data under a control of the processor.

In the embodiments, receiving condition information of the second system information includes: a RSRP threshold and/or a TA threshold.

In the embodiments, before sending the first system information to the terminal, the device further includes:
receiving a request message of the system information or terminal auxiliary information sent by the terminal.

In the embodiments, the request message of the system information or the terminal auxiliary information includes one or a combination of:
system information requested by the terminal;
an MCS requested by the terminal;
a CCE aggregation level requested by the terminal;
a modulation order request requested by the terminal;
a subcarrier spacing for sending the second system information requested by the terminal;
a sending period for sending the second system information requested by the terminal;
an encrypted mode of the second system information requested by the terminal; and
a number of sending repetitions of the second system information requested by the terminal.

In the embodiments, the device is further configured to:
configure the first information based on the request message of the system information or the terminal auxiliary information.

In the embodiments, configuring the first information based on the request message of the system information or the terminal auxiliary information includes:
configuring system information for sending requested by the terminal;
configuring an MCS as a minimum MCS in multiple MCS sent by multiple terminals;
configuring a CCE aggregation level as a maximum CCE aggregation level in multiple CCE aggregation level requests sent by the multiple terminals;
configuring a modulation order as a minimum modulation order in multiple modulation orders sent by the multiple terminals;
configuring a subcarrier spacing for sending the second system information requested by the terminal;
configuring a sending period for sending the second system information requested by the terminal;
configuring an encrypted mode of the second system information requested by the terminal; and
configuring a number of sending repetitions for sending the second system information requested by the terminal.

A network side apparatus includes:
a first sending module, configured to send first system information to a terminal, in which the first system information includes first information of a group of second system information, and the first information includes one or a combination of: an indication of a control information aggregation level of the second system information, a number of MIMO streams of the second system information, a valid area of the second system information, valid time of the second system information, receiving condition information of the second system information, an MCS index indicating a modulation and coding scheme of a PDCCH or a PDSCH of the second system information, a modulation mode of the second system information, a subcarrier spacing for sending the second system information, a sending period of the second system information, encrypted information of the second system information, an encrypted public key of the second system information, and a number of sending repetitions of the second system information; and
a second sending module, configured to send the group of second system information to the terminal based on the first information.

In the embodiments, the first sending module is further configured to send the receiving condition information of the second system information including: an RSRP threshold and/or a TA threshold.

In the embodiments, the receiving module is configured to receive a request message of the system information or terminal auxiliary information sent by the terminal before sending the first system information to the terminal.

In the embodiments, the receiving module is configured to receive the request message of the system information or terminal auxiliary information including one or a combination of:
system information requested by the terminal;
an MCS requested by the terminal;
a CCE aggregation level requested by the terminal;
a modulation order request requested by the terminal;
a subcarrier spacing for sending the second system information requested by the terminal;
a sending period for sending the second system information requested by the terminal;
an encrypted mode of the second system information requested by the terminal; and
a number of sending repetitions of the second system information requested by the terminal.

In the embodiments, the first sending module is further configured to configure the first information based on the request message of the system information or the terminal auxiliary information.

In the embodiments, when configuring the first information based on the request message of the system information or the terminal auxiliary information, the first sending module is further configured to:
configure system information for sending requested by the terminal;
configure an MCS as a minimum MCS in multiple MCS sent by multiple terminals;
configure a CCE aggregation level as a maximum CCE aggregation level in multiple CCE aggregation level requests sent by the multiple terminals;
configure a modulation order as a minimum modulation order in multiple modulation orders sent by the multiple terminals;
configure a subcarrier spacing for sending the second system information requested by the terminal;
configure a sending period for sending the second system information requested by the terminal;
configure an encrypted mode of the second system information requested by the terminal; and
configure a number of sending repetitions for sending the second system information requested by the terminal.

A terminal includes:
a processor is configured to read a program in a memory to execute:
receiving first system information sent by a network side, in which the first system information includes first information of a group of second system information, and the first information includes one or a combination of: an indication of a control information aggregation level of the second system information, a number of MIMO streams of the second system information, a valid area of the second system information, valid time of the second system information, receiving condition information of the second system information, a MCS index indicating a modulation and coding scheme of a PDCCH or a PDSCH of the second system information, a modulation mode of the second system information, a subcarrier spacing for sending the second system information, a sending period of the second system information, encrypted information of the second system information, an encrypted public key of the second system information, and a number of sending repetitions of the second system information; and
receiving the group of second system information sent by the network side based on the first information; and
a transceiver is configured to receive and send data under a control of the processor.

In the embodiments, the receiving condition information of the second system information includes: an RSRP threshold and/or a TA threshold.

In the embodiments, the terminal further includes:
receiving the second system information when an RSRP measured by the terminal exceeds the RSRP threshold; and/or
receiving the second system information when a TA of the terminal is lower than the TA threshold

In the embodiments, before receiving the first system information sent by the network side, the terminal is further configured to:
send a request message of the system information or terminal auxiliary information to the network side.

In the embodiments, the request message of the system information or the terminal auxiliary information includes one or a combination of:
system information requested by the terminal;
an MCS requested by the terminal;
a CCE aggregation level requested by the terminal;
a modulation order request requested by the terminal;
a subcarrier spacing for sending the second system information requested by the terminal;
a sending period for sending the second system information requested by the terminal;
an encrypted mode of the second system information requested by the terminal; and
a number of sending repetitions of the second system information requested by the terminal.

In the embodiments, after sending the request message of the system information or the terminal auxiliary information to the network side, the terminal is further configured to:
receive the first information of the group of second system information sent by the network side, enter a connection state when the first system information is not received, and sending the request message of the system information or the terminal auxiliary information to the network side.

In the embodiments, after receiving the first system information sent by the network side, the terminal further includes:
determining whether to receive the second system information based on the receiving condition information of the second system information in the first information.

A terminal includes:
a first receiving module, configured to receive first system information sent by a network side, in which the first system information includes first information of a group of second system information, and the first information includes one or a combination of: an indication of a control information aggregation level of the second system information, a number of MIMO streams of the second system information, a valid area of the second system information, valid time of the second system information, receiving condition information of the second system information, an MCS index indicating a modulation and coding scheme of a PDCCH or a PDSCH of the second system information, a modulation mode of the second system information, a subcarrier spacing for sending the second system information, a sending period of the second system information, encrypted information of the second system information, an encrypted public key of the second system information, and a number of sending repetitions of the second system information; and
a second receiving module, configured to receive the group of second system information sent by the network side based on the first information.

In the embodiments, the first receiving module is further configured to receive the first information including one or a combination of:
the MCS index indicating the modulation and coding scheme of the PDCCH or the PDSCH of the second system information, the modulation mode of the second system information, the subcarrier spacing for sending the second system information, the sending period of the second system information, the encrypted information of the second system information, the encrypted public key of the second system information, and the number of sending repetitions of the second system information.

In the embodiments, the first receiving module is further configured to receive receiving condition information of the second system information including an RSRP threshold, and/or a TA threshold.

In the embodiments, the second receiving module is further configured to receive the second system information when an RSRP measured by the terminal exceeds the RSRP threshold; and/or
receive the second system information when a TA of the terminal is lower than the TA threshold.

In the embodiments, the apparatus is further includes:
a sending module, configured to send a request message of the system information or terminal auxiliary information to the network side before receiving the first system information sent by the network side.

In the embodiments, the sending module is further configured to send the request message of the system information or the terminal auxiliary information including one or a combination of:
the system information requested by the terminal;
an MCS requested by the terminal;
a CCE aggregation level requested by the terminal;
a modulation order request requested by the terminal;
the subcarrier spacing for sending the second system information requested by the terminal;
the sending period for sending the second system information requested by the terminal;
an encrypted mode of the second system information requested by the terminal; and
the number of sending repetitions of the second system information requested by the terminal.

In the embodiments, the sending module is further configured to receive the first information of the group of second system information sent by the network side after sending the request message of the system information or the terminal auxiliary information to the network side, to enter a connection state when the first system information is not received, and to send the request message of the system information or the terminal auxiliary information to the network side.

In the embodiments, the second receiving module is further configured to determine whether to receive the second system information based on the receiving condition information of the second system information in the first information after receiving the first system information sent by the network side.

A computer-readable storage medium. The computer-readable storage medium has a computer program stored thereon. The computer program is executed by a processor to implement the above method for sending and/or receiving the system information.

The beneficial effect of the disclosure is as follows.

In the technical solution according to the embodiments of the disclosure, since the first information includes information such as the CCE aggregation level, the number of MIMO streams, the valid area, the valid time, receiving conditions, it is indicated modes of CCE and the number of MIMO streams used for sending the second system information. For the second system information similar to positioning assistance information, due to a large amount of data, a reasonable coverage of the second system information may be ensured by configuring an appropriate CCE aggregation level, and an adaptive sending delay, the valid area, the valid time and the reception condition may be determined by configuring the appropriate number of MIMO streams, such that it is ensured that the second system information is valid in a specific geographical space and time, and the terminal needs to re-acquire updated second system information after leaving a specific geographical space and exceeding the valid time, thereby reducing resource overhead. The second system information may be modulated at a higher order than the first system information to carry a larger amount of data. However, the receiving condition restricts that the second system information is received only when the terminal is in a center of a cell with a good signal coverage, and a reception may fail even if the reception is performed at an edge of the cell. Therefore, the terminal at the edge of the cell does not need to receive the second system information, thereby saving terminal resources.

Further, since the system information is repeatedly sent, the terminal receives the system information for many time and jointly decodes the system information, a better coverage may be achieved. The coverage may be adjusted and reduced based on an actual channel condition, to save resources.

Further, the receiving condition include: the RSRP threshold and/or TA (time advance) threshold. The second system information may carry the large amount of data with a higher-order modulation than the first system information. The second system information is received only when there is a good signal coverage of the terminal in the center of the cell, and the reception may fail even if the reception is performed at the edge of the cell. Therefore, the terminal at the edge of the cell does not need to receive the second system information.

### BRIEF DESCRIPTION OF THE DRAWINGS

The accompanying drawings herein are used to provide a further understanding for the disclosure, and constitute a part of the specification. Illustrative embodiments of the disclosure and descriptions thereof are used to explain the disclosure, and do not constitute a limitation for the disclosure.
FIG. 1 is a schematic flowchart illustrating a method for sending system information in a network side according to an embodiment of the disclosure;
FIG. 2 is a schematic flowchart illustrating a method for receiving system information in a terminal side according to an embodiment of the disclosure;
FIG. 3 is a schematic diagram illustrating a structure of a network side device according to an embodiment of the disclosure; and
FIG. 4 is a schematic diagram illustrating a structure of a terminal according to an embodiment of the disclosure.

### DETAILED DESCRIPTION

In a creating process of the disclosure, the inventor notices that:

In the embodiments and description, positioning system information and first information thereof are mainly taken as examples. It is more typical to apply a same modulation and coding scheme and a same number of MIMO streams to both the positioning system information and common system information, so the positioning system information and the first information thereof are taken as examples. However, other similar messages and first information of the similar message may also be used. In fact, as long as the modulation and coding mode and the number of MIMO streams of the ordinary system information are used for sending, a greater overhead is likely caused, and even large positioning system information exceeding a limit of a maximum bit number of the system information may also be used. The positioning system information and the first information thereof are merely used to teach those skilled in the art how to implement the disclosure, but not mean that the disclosure is merely applicable to the positioning system information and the first information thereof. An applicable message may be determined with reference to a practical requirement in an implementation process.

In the related art, the same modulation and coding mode and the number of MIMO streams are applied to both the positioning system information and the ordinary system information. However, with the development of a positioning technology, the positioning system information becomes more and more huge. When the modulation mode and the number of MIMO streams of the ordinary system information are also used for sending, a greater overhead may be caused, and even the large positioning system information exceeding the limit of the maximum number of bits of the system information is caused.

Compared with the ordinary system information, the positioning system information has different characteristics.

It needs to be ensured that, all terminals in a cell may receive the ordinary system information at any position and at any moment.

As auxiliary information of the positioning technology, the positioning system information may be used all valid time after being received, without repeated reception.

Based on the above analysis, the positioning system information has characteristics of a large amount of data and not needing to be received by the terminal at any time and any position. Therefore, the positioning system information may be configured with a higher modulation order and/or a larger number of MIMO streams.

Therefore, the embodiments of the disclosure provide methods for sending and receiving the system information. Detailed embodiments of the disclosure are described below with reference to the accompanying drawings.

In the process of description, description is made respectively to implementations of a terminal and a network side, and then an implementation of a cooperation of the terminal and the network side is given to better understand the implementations of the solution given in the embodiments of the disclosure. Such description way does not mean that the terminal and the network side must be implemented together or separately. In fact, the terminal and the network side also solve their own problems when the terminal and the network side are implemented separately, and a better technical effect may be acquired when the terminal and the network side are used together.

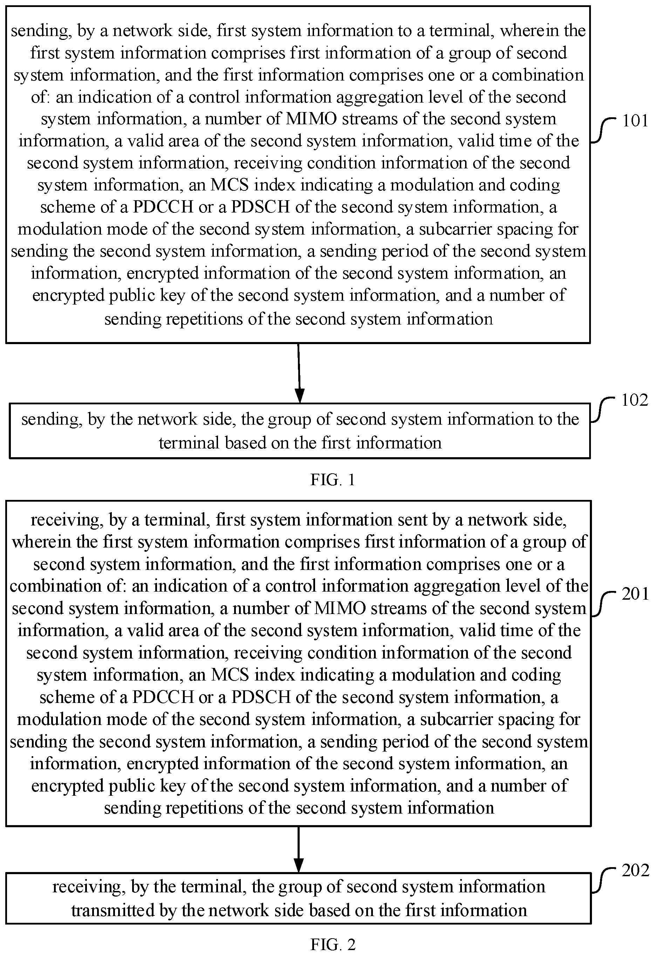

FIG. 1 is a schematic flowchart illustrating an implementation of a method for sending system information in a network side. As illustrated in FIG. 1, the method includes the following steps.

At block 101, the network side sends first system information to a terminal, in which the first system information includes first information of a group of second system information, and the first information includes one or a combination of: an indication of a control information aggregation level of the second system information, a number of MIMO streams of the second system information, a valid area of the second system information, valid time of the second system information, receiving condition information of the second system information, a modulation and coding scheme (MCS) index indicating a modulation and coding strategy of a PDCCH or a PDSCH of the second system information, a modulation mode of the second system information, a subcarrier spacing for sending the second system information, a sending period of the second system information, encrypted information of the second system information, an encrypted public key of the second system information, and a number of sending repetitions of the second system information.

At block 102, the network side sends the group of second system information to the terminal based on the first information.

FIG. 2 is a schematic flowchart illustrating an implementation of a method for receiving system information in a terminal side. As illustrated in FIG. 2, the method may include the following steps.

At block 201, the terminal receives first system information sent by a network side, in which the first system information includes first information of a group of second system information, and the first information includes one or a combination of: an indication of a control information aggregation level of the second system information, a number of MIMO streams of the second system information, a valid area of the second system information, valid time of the second system information, receiving condition information of the second system information, an MCS index indicating a modulation and coding strategy of a PDCCH or a PDSCH of the second system information, a modulation mode of the second system information, a subcarrier spacing for sending the second system information, a sending period of the second system information, encrypted information of the second system information, an encrypted public key of the second system information, and a number of sending repetitions of the second system information.

At block 202, the terminal receives the group of second system information sent by the network side based on the first information.

In detail, the terminal receives the first system information (such as, the ordinary system information) sent by the network side. The first system information includes the first information of the group of second system information, and the group of second system information includes at least one piece of second system information (such as, the positioning system information). That is, several pieces of second system information may also be included, which combine into one group of second system information.

The control information aggregation level refers to an aggregation level of the PDCCH of the second system information, that is, a CCE aggregation level.

The first information may be shared by a part of the group of second system information, or may be applied to a certain piece of system information in the group of second system information alone. In practice, the first information may be named as configuration information, scheduling information, or other names, but there is no doubt that no matter how the first information is named, the implementation of the solution will not be affected.

In detail, the network side sends at least one group of parameters. For example, if the network side sends one modulation order, the modulation order is applied to the second system information. If the network side sends two modulation orders, the two modulation orders are applied to the first system information and the second system information respectively. Because of the characteristic that the positioning system information has a large amount of data, the positioning system information may use the modulation order, the number of MIMO streams and the like which are different from those of the first system information. Therefore, specific parameters may be configured for the second system information, and the first system information may also be configured with parameters or use default parameters.

The first information of the system information may be one or a combination of following information.
1. An MCS index, that is, an MCS identification. The MCS is configured to indicate the modulation and coding scheme of the PDCCH or the PDSCH of the second system information, such as, an MCS-1, an MCS-5, etc. Different MCSs represents different modulation and coding schemes.
2. A modulation mode, that is, a modulation mode of the system information, which may be the modulation mode of the PDCCH and/or the PDSCH, such as, the MCS-1, an MCS-3, etc., for example, a binary phase shift keying (BPSK), a quadrature phase shift keying (QPSK), a 16 quadrature amplitude modulation (QAM), a 64QAM, a 256QAM, a 1024QAM, etc.
3. The CCE aggregation level. The CCE aggregation level refers to a PDCCH aggregation level of the system information. The CCE aggregation level may affect a coverage of the system information, and the CCE aggregation level may be adjusted based on a target coverage range. For the second system information, due to the large amount of data, a resource overhead may be reduced by configuring an appropriate CCE aggregation level.
4. The number of MIMO streams, that is, the number of MIMO streams of the system information.
5. The subcarrier spacing.
6. A sending period. The sending period refers to the sending period of the system information.
7. Encrypted information, that is, it indicates whether the system information is encrypted and what encrypted way or algorithm is used.
8. An encrypted public key. The encrypted public key is configured for the terminal to decode the second system information.
9. The number of sending repetitions, that is, indicating how many times the system information is repeatedly sent. By repeatedly sending the system information, the terminal receives the system information for many times and joint decodes the system information, which can achieve a better coverage. The number of sending repetitions may be adjusted and reduced based on an actual channel condition to save resources.
10. A valid area, that is, in which area the system information is valid. The valid area may be at least one of: a cell identification, or a tracking area (TA) identification, a geographical area identification, or an altitude or height identification. It may be ensured that the second system information (i.e., the positioning system information) is valid in a specific geographical space, and if the terminal leaves the geographical space, the terminal needs to re-acquire updated second system information.
11. Valid time, that is, the system information is valid within the valid time.
12. Receiving condition information. The "receiving condition information" means that the terminal may receive the second system information only when a receiving condition is met, and does not need to receive the second system information when the receiving condition is not met. The receiving condition includes at least one of: a reference signal received power (RSRP) threshold and a timing advance (TA) threshold. In case that the receiving condition is the RSRP threshold, the terminal may receive the second system information only when an RSRP measured by the terminal exceeds the RSRP threshold. In case that the receiving condition is the TA threshold, the terminal may receive the second system information only when a TA of the terminal is lower than the TA threshold. The second system information may carry a large amount of data by using a higher-order modulation than the first system information. Therefore, the second system information may be received only when the terminal is in a center of a cell with a good signal coverage, and the reception may fail even if the reception is performed at an edge of the cell, so the terminal at the edge of the cell does not need to receive the second system information. That is, in an implementation, after receiving the first system information sent by the network side, the terminal may further perform:
   determining whether to receive the second system information based on the receiving condition information of the second system information in the first information.

In the embodiments, when the receiving condition information of the second system information includes: the RSRP threshold and/or the TA threshold, the method further includes:
the terminal receives the second system information when the RSRP measured by the terminal exceeds the RSRP threshold; and/or,
the terminal receives the second system information when the TA of the terminal is lower than the TA threshold.

The terminal may use the configuration to receive the system information after receiving the above information in the items 1-9.

After the above information in the items 10 and 11 is received, the terminal may determine whether the second system information stored currently is valid, and whether the second system information is needed to be received again. That is, as long as the second system information stored in the terminal is still valid, the terminal does not need to receive the second system information repeatedly.

For example, the group of second system information includes three pieces of second system information A/B/C. The first information of the second system information carried in the first system information includes the following.

A modulation order of the second system information A is BPSK, and the number of MIMO streams is 2.

A modulation order of the second system information B is 16QAM, and the number of MIMO streams is 4.

A modulation order of the second system information C is 64QAM, and the number of MIMO streams is 8.

The terminal receives the second system information A/B/C respectively by using the first information after receiving the above information.

In the embodiments, before the terminal receives the first system information sent by the network side, the method further includes:
sending, by the terminal, a request message of the system information or terminal auxiliary information to the network side.

Correspondingly, before the network side sends the first system information to the terminal, the method further includes:
receiving the request message of the system information or the terminal auxiliary information sent by the terminal.

In the embodiments, the request message of the system information or the terminal auxiliary information includes one or a combination of:
system information requested by the terminal;
an MCS requested by the terminal;
a CCE aggregation level requested by the terminal;
a modulation order request requested by the terminal;
the subcarrier spacing for sending the second system information requested by the terminal;
the sending period for sending the second system information requested by the terminal;
an encrypted mode of the second system information requested by the terminal; and
the number of sending repetitions of the second system information requested by the terminal.

In the embodiments, the method further includes:
configuring, by the network side, the first information based on the request message of the system information or the terminal auxiliary information.

In a detailed implementation, configuring the first information based on the request message of the system information or the terminal auxiliary information includes:
configuring the system information for sending requested by the terminal;
configuring the MCS as a minimum MCS in a plurality of MCSs sent by a plurality of terminals;
configuring the CCE aggregation level as a maximum CCE aggregation level in a plurality of CCE aggregation level requests sent by the plurality of terminals;
configuring the modulation order as a minimum modulation order in a plurality of modulation orders sent by the plurality of terminals;
configuring the subcarrier spacing for sending the second system information requested by the terminal;
configuring the sending period for sending the second system information requested by the terminal;
configuring the encrypted mode of the second system information requested by the terminal; and
configuring the number of sending repetitions for sending the second system information requested by the terminal.

In detail, the terminal may send the request message of the system information, or called the terminal auxiliary information, to the network side. The request message of the system information is configured to request, such as, one or more pieces of second system information in the group of second system information. Alternatively, the terminal auxiliary information is configured to assist the network side to send the system information.

Accordingly, the network side configures the first information based on the request message of the system information or the terminal auxiliary information.

The request message of the system information includes one or a combination of the following.

Specified system information requested by the terminal.

An MCS request. The terminal requests a specific MCS from the network side or sends a maximum MCS. Requesting the specific MCS refers to requesting the network side to modulate the PDCCH or PDSCH by using the specific MCS. Sending the maximum MCS refers to that the terminal sends the maximum MCS of the terminal in a current channel condition to the network side. The network side receives the MCS requests sent by the plurality of terminals, and the network may select the minimum MCS to modulate the PDCCH or PDSCH, to ensure that as many terminals as possible may decode correctly.

A CCE aggregation level request, configured to assist the network side to select an appropriate CCE aggregation level to send the second system information. What the terminal sends may be its own preferred CCE aggregation level or a minimum CCE aggregation level requirement for ensuring the terminal to correctly decode. The higher the CCE aggregation level, the better the coverage of the PDCCH. The terminal with a good signal may request a lower CCE, and the terminal with a poor signal may request a higher CCE. The network side determines to use a specific CCE aggregation level for sending the second system information after receiving the CCE aggregation level request. One possibility is that the network side may use a maximum CCE aggregation level to ensure that the terminals with good and bad signals may receive the signal.

The modulation order request, configured to the terminal to request the network side to send system information with a specific modulation order. The modulation order may be a modulation order desired by the terminal or a maximum modulation order, that is, the terminal may not decode correctly in the current channel condition when the maximum modulation order is exceeded. After the requests from the plurality of terminals are received, the network side may select the minimum modulation order for sending to ensure that all the terminals may receive the system information, or the network side may select an MCS corresponding to the modulation order. The higher the modulation order, the terminal with a good channel may demodulate correctly, but the terminal with a poor channel may not demodulate correctly. The network side is requested to send the system information using a specific number of MIMO streams.

Request for the network side to send the system information using a specific subcarrier spacing.

Request for the network side to send the system information using a specific period.

Request for the network side to send the system information using a specific encrypted mode.

Request for the network side to send the system information using a specific number of sending repetitions.

In the embodiments, after sending the request message of the system information or the terminal auxiliary information to the network side, the method further includes:
receiving the first information of the group of second system information sent by the network side, entering a connection state when the first system information is not received, and sending the request message of the system information or the terminal auxiliary information to the network side.

In detail, the terminal may receive the first information of the group of second system information sent by the network side after the terminal sends the request message of the system information. In this way, the terminal may know whether requested system information starts to be broadcast, and if not, the terminal enters the connection state and sends the request message of the system information.

For example, a relationship between the MCS and the modulation order may be:
one MCS corresponds to a group of modulation orders and code rates.

The terminal may directly request the specific MCS or request the specific modulation order.

When the specific modulation order is requested, a group of MCSs corresponding to the specific modulation order may be applied to the terminal, such as, MCS 10~16 corresponding to a modulation order 4.

| **MCS** Index *I_{MCS}* | Modulation Order *Qₘ* | Target code Rate *Rx* [1024] | Spectral efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | reserved | |
| 30 | 4 | reserved | |
| 31 | 6 | reserved | |

Based on a same inventive concept, the embodiments of the disclosure also provide a network side device, a terminal, and a computer-readable storage medium. Since a principle of solving problems by these devices is similar to that of the method for sending and receiving the system information, implementations of these devices may refer to the implementations of the method, which is not elaborated herein.

The technical solution according to the embodiments of the disclosure may be implemented as follows.

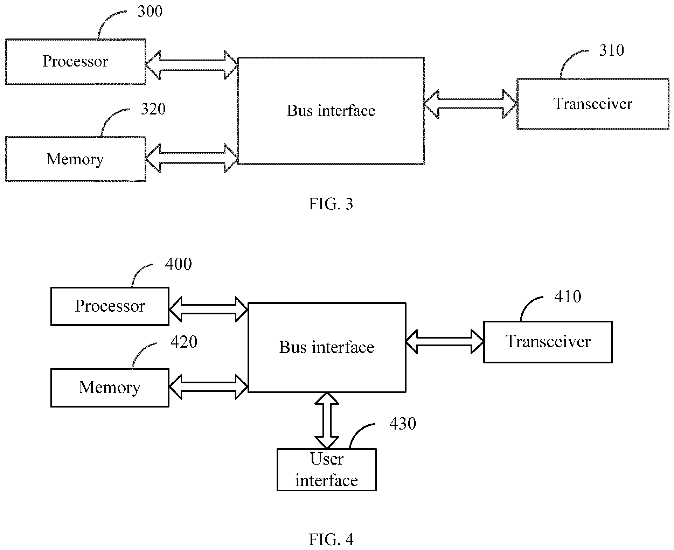

FIG. 3 is a schematic diagram illustrating a structure of the network side device. As illustrated in FIG. 3, the device includes the following.

A processor 300 is configured to read a program in a memory 320 to execute:
sending first system information to a terminal, in which the first system information includes first information of a group of second system information, and the first information includes one or a combination of: an indication of a control information aggregation level of the second system information, a number of MIMO streams of the second system information, a valid area of the second system information, valid time of the second system information, receiving condition information of the second system information, an MCS index indicating a modulation and coding scheme of a PDCCH or a PDSCH of the second system information, a modulation mode of the second system information, a subcarrier spacing for sending the second system information, a sending period of the second system information, encrypted information of the second system information, an encrypted public key of the second system information, and a number of sending repetitions of the second system information; and
sending the group of second system information to the terminal based on the first information.

A transceiver 310 is configured to receive and send data under the control of the processor 300.

In the embodiments, the receiving condition information of the second system information includes: a RSRP threshold and/or a TA threshold.

In the embodiments, before sending the first system information to the terminal, the device further includes:

receiving a request message of the system information or terminal auxiliary information sent by the terminal.

In the embodiments, the request message of the system information or the terminal auxiliary information includes one or a combination of:
system information requested by the terminal;
an MCS requested by the terminal;
a CCE aggregation level requested by the terminal;
a modulation order request requested by the terminal;
the subcarrier spacing for sending the second system information requested by the terminal;
the sending period for sending the second system information requested by the terminal;
an encrypted mode of the second system information requested by the terminal; and
the number of sending repetitions of the second system information requested by the terminal.

In the embodiments, the device further performs:
configuring the first information based on the request message of the system information or the terminal auxiliary information.

In the embodiments, configuring the first information based on the request message of the system information or the terminal auxiliary information includes:
configuring the system information for sending requested by the terminal;
configuring an MCS as a minimum MCS in a plurality of MCSs sent by a plurality of terminals;
configuring a CCE aggregation level as a maximum CCE aggregation level in a plurality of CCE aggregation level requests sent by the plurality of terminals;
configuring a modulation order as a minimum modulation order in a plurality of modulation orders sent by the plurality of terminals;
configuring the subcarrier spacing for sending the second system information requested by the terminal;
configuring the sending period for sending the second system information requested by the terminal;
configuring the encrypted mode of the second system information requested by the terminal; and
configuring the number of sending repetitions for sending the second system information requested by the terminal.

In FIG. 3, a bus architecture may include any number of interconnected buses and bridges. In detail, one or more processors represented by the processor 300 and various circuits of memories represented by the memory 320 are linked together. The bus architecture may also link various other circuits, such as a peripheral device, a voltage regulator and a power management circuit, which are well known in the art and will not be further described here. The bus interface provides an interface. The transceiver 310 may be a plurality of elements, i.e., including a transmitter and a receiver, and providing a unit for communicating with various other devices in a sending medium. The processor 300 is responsible for managing the bus architecture and general processing, and the memory 320 may store data used by the processor 300 when performing operations.

The embodiments of the disclosure also provide a network side apparatus, including:
a first sending module, configured to send first system information to a terminal, in which the first system information includes first information of a group of second system information, and the first information includes one or a combination of: an indication of a control information aggregation level of the second system information, a number of MIMO streams of the second system information, a valid area of the second system information, valid time of the second system information, receiving condition information of the second system information, an MCS index indicating a modulation and coding scheme of a PDCCH or a PDSCH of the second system information, a modulation mode of the second system information, a subcarrier spacing for sending the second system information, a sending period of the second system information, encrypted information of the second system information, an encrypted public key of the second system information, and a number of sending repetitions of the second system information; and
a second sending module, configured to send the group of second system information to the terminal based on the first information.

In the embodiments, the first sending module is further configured to send the receiving condition information of the second system information including: an RSRP threshold and/or a TA threshold.

In the embodiments, the receiving module is configured to receive a request message of the system information or terminal auxiliary information sent by the terminal before sending the first system information to the terminal.

In the embodiments, the receiving module is configured to receive the request message of the system information or the terminal auxiliary information including one or a combination of:
system information requested by the terminal;
an MCS requested by the terminal;
a CCE aggregation level requested by the terminal;
a modulation order request requested by the terminal;
the subcarrier spacing for sending the second system information requested by the terminal;
the sending period for sending the second system information requested by the terminal;
an encrypted mode of the second system information requested by the terminal; and
the number of sending repetitions of the second system information requested by the terminal.

In the embodiments, the first sending module is further configured to configure the first information based on the request message of the system information or the terminal auxiliary information.

In the embodiments, when the first sending module is further configured to configure the first information based on the request message of the system information or the terminal auxiliary information, the first sending module is configured to:
configure the system information for sending requested by the terminal;
configure an MCS as a minimum MCS in a plurality of MCSs sent by a plurality of terminals;
configure a CCE aggregation level as a maximum CCE aggregation level in a plurality of CCE aggregation level requests sent by the plurality of terminals;
configure a modulation order as a minimum modulation order in a plurality of modulation orders sent by the plurality of terminals;
configure the subcarrier spacing for sending the second system information requested by the terminal;
configure the sending period for sending the second system information requested by the terminal;
configure the encrypted mode of the second system information requested by the terminal; and
configure the number of sending repetitions for sending the second system information requested by the terminal.

For the convenience of description, each part of the above apparatus is divided into various modules or units based on functions and described separately. Functions of each module or unit may be implemented in one or more pieces of software or hardware when the disclosure is implemented.

FIG. 4 is a schematic diagram illustrating a structure of a terminal. As illustrated in FIG. 4, the terminal includes the following.

A processor 400 is configured to read a program in a memory 420 to execute:
receiving first system information sent by a network side, in which the first system information includes first information of a group of second system information, and the first information includes one or a combination of: an indication of a control information aggregation level of the second system information, a number of MIMO streams of the second system information, a valid area of the second system information, valid time of the second system information, receiving condition information of the second system information, an MCS index indicating a modulation and coding scheme of a PDCCH or a PDSCH of the second system information, a modulation mode of the second system information, a subcarrier spacing for sending the second system information, a sending period of the second system information, encrypted information of the second system information, an encrypted public key of the second system information, and a number of sending repetitions of the second system information; and
receiving the group of second system information sent by the network side based on the first information.

A transceiver 410 is configured to receive and send data under a control of the processor 400.

In the embodiments, the receiving condition information of the second system information includes: an RSRP threshold and/or a TA threshold.

In the embodiments, the terminal is further configured to:
receive the second system information when an RSRP measured by the terminal exceeds the RSRP threshold; and/or
receive the second system information when a TA of the terminal is lower than the TA threshold

In the embodiments, before receiving the first system information sent by the network side, the terminal is further configured to:
send a request message of the system information or terminal auxiliary information to the network side.

In the embodiments, the request message of the system information or the terminal auxiliary information includes one or a combination of:
system information requested by the terminal;
an MCS requested by the terminal;
a CCE aggregation level requested by the terminal;
a modulation order request requested by the terminal;
the subcarrier spacing for sending the second system information requested by the terminal;
the sending period for sending the second system information requested by the terminal;
an encrypted mode of the second system information requested by the terminal; and
the number of sending repetitions of the second system information requested by the terminal.

In the embodiments, after sending the request message of the system information or the terminal auxiliary information to the network side, the terminal is further configured to:
receive the first information of the group of second system information sent by the network side, entering a connection state when the first system information is not received, and sending the request message of the system information or the terminal auxiliary information to the network side.

In the embodiments, after receiving the first system information sent by the network side, the terminal is further configured to:
determine whether to receive the second system information based on the receiving condition information of the second system information in the first information.

In FIG. 4, a bus architecture may include any number of interconnected buses and bridges. In detail, one or more processors represented by the processor 400 and various circuits of memories represented by the memory 420 are linked together. The bus architecture may also link various other circuits, such as a peripheral device, a voltage regulator and a power management circuit, which are well known in the art, and will not be further described here. The bus interface provides an interface. The transceiver 410 may be a plurality of elements, i.e., including a transmitter and a receiver, and providing a unit for communicating with various other devices in a sending medium. For different user devices, the user interface 430 may also be an interface capable of externally or internally connecting needed devices, including but not limited to, a keypad, a display, a speaker, a microphone, a joystick and the like.

The processor 400 is responsible for managing the bus architecture and general processing, and the memory 420 may store data used by the processor 400 when performing operations.

The embodiments of the disclosure further provide a terminal, including.
a first receiving module, configured to receive first system information sent by a network side, in which the first system information includes first information of a group of second system information, and the first information includes one or a combination of: an indication of a control information aggregation level of the second system information, a number of MIMO streams of the second system information, a valid area of the second system information, valid time of the second system information, receiving condition information of the second system information, an MCS index indicating a modulation and coding scheme of a PDCCH or a PDSCH of the second system information, a modulation mode of the second system information, a subcarrier spacing for sending the second system information, a sending period of the second system information, encrypted information of the second system information, an encrypted public key of the second system information, and a number of sending repetitions of the second system information; and
a second receiving module, configured to receive the group of second system information sent by the network side based on the first information.

In the embodiments, the first receiving module is further configured to receive the receiving condition information of the second system information including an RSRP threshold and/or a TA threshold.

In the embodiments, the second receiving module is further configured to receive the second system information when an RSRP measured by the terminal exceeds the RSRP threshold; and/or
receive the second system information when a TA of the terminal is lower than the TA threshold.

In the embodiments, the terminal further includes:
a sending module, configured to send a request message of the system information or terminal auxiliary information to the network side before receiving the first system information sent by the network side.

In the embodiments, the sending module is further configured to send the request message of the system information or the terminal auxiliary information including one or a combination of:
system information requested by the terminal;
an MCS requested by the terminal;
a CCE aggregation level requested by the terminal;
a modulation order request requested by the terminal;
a subcarrier spacing for sending the second system information requested by the terminal;
a sending period for sending the second system information requested by the terminal;
an encrypted mode of the second system information requested by the terminal; and
a number of sending repetitions of the second system information requested by the terminal.

In the embodiments, the sending module is further configured to receive the first information of the group of second system information sent by the network side after sending the request message of the system information or the terminal auxiliary information to the network side, to enter a connection state when the first system information is not received, and to send the request message of the system information or the terminal auxiliary information to the network side.

In the embodiments, the second receiving module is further configured to determine whether to receive the second system information based on the receiving condition information of the second system information in the first information after receiving the first system information sent by the network side.

For the convenience of description, each part of the above apparatus is divided into various modules or units based on functions and described separately. Functions of each module or unit may be implemented in one or more pieces of software or hardware when the disclosure is implemented.

The embodiments of the disclosure also provide a computer-readable storage medium. The computer-readable storage medium has a computer program stored thereon. The computer program is executed by a processor to implement the method for sending and/or receiving the system information.

For a detailed implementation, please refer to the implementations of the method for sending the system information in the network side and/or the method for receiving the system information in the terminal side.

In conclusion, in the technical solution according to the embodiments of the disclosure, there is provided a solution that the terminal receives the first information of the group of second system information sent by the network side, and the terminal sends the request message of the system information to the network side.

In the related art, the same modulation and coding mode and the same number of MIMO streams are applied to both the positioning system information and an ordinary system information. However, with the development of the positioning technology, the positioning system information becomes more and more huge. If a modulation mode of and a number of MIMO streams the ordinary system information are also used for sending, a greater overhead may be caused, and even large positioning system information exceeding a limit of a maximum bit number of the system information is caused.

For the positioning system information with a large amount of data, but the terminal does not need to receive the positioning system information at any time and any place, the solution configures the positioning system information with a higher modulation order and/or a larger number of MIMO streams, to achieve an efficient sending and reception of the system information.

It should be understood by those skilled in the art that, the embodiments of the disclosure may be provided as a method, a system, or a computer program product. Therefore, the disclosure may use a form of an entirely hardware embodiment, an entirely software embodiment, or an embodiment in combination with software and hardware aspects. Moreover, the disclosure may use a form of a computer program product implemented on one or more computer usable storage medium (including but not limited to, a magnetic disk memory and an optical memory, etc.) including computer usable program codes therein.

The disclosure is described with reference to the flowcharts and/or the block diagrams of methods, devices (systems), and computer program products according to the embodiments of the disclosure. It should be understood that, each flow and/or block in the flowchart and/or block diagram, and combinations of the flow and/or block in the flowchart and/or block diagram may be implemented by computer program instructions. These computer program instructions may be provided to a processor of a general-purpose computer, a special-purpose computer, an embedded processor or other programmable data processing device to produce a machine, such that the instructions are executed by the processor of the computer or other programmable data processing device to generate a device for implementing a function specified by one or more flows in the flow chart, and/or one or more blocks in the block diagram.

These computer program instructions may also be stored in a computer-readable memory that may direct a computer or other programmable data processing device to work in a particular manner, such that the computer program instructions stored in the computer-readable memory produce a manufacture product including an instruction device that implement the functions specified in one or more flow in the flowchart and/or one or more blocks in the block diagram.

These computer program instructions may also be loaded into the computer or other programmable data processing device, such that a series of operational steps are performed on the computer or other programmable data processing device to produce a computer-implemented process, such that the instructions executed in the computer or other programmable data processing device provide steps for implementing the functions specified by one or more flows in the flowchart and/or one or more blocks in the block diagram.

Obviously, those skilled in the art may make various modifications and variations to the disclosure without departing from a spirit and scope of the disclosure. In this way, when these modifications and variations of the disclosure are within a scope of claims of the disclosure and their equivalents, the disclosure is also intended to include these modifications and variations.

## Claims

1. A method for sending system information, comprising:
sending, by a network side, first system information to a terminal, wherein the first system information comprises first information of a group of second system information, and the first information comprises one or a combination of: an indication of a control information aggregation level of the second system information, a number of multiple input multiple output (MIMO) streams of the second system information, a valid area of the second system information, valid time of the second system information, receiving condition information of the second system information, a modulation and coding scheme (MCS) index indicating a modulation and coding scheme of a physical downlink control channel (PDCCH) or a physical downlink shared channel (PDSCH) of the second system information, a modulation mode of the second system information, a subcarrier spacing for sending the second system information, a sending period of the second system information, encrypted information of the second system information, an encrypted public key of the second system information, and a number of sending repetitions of the second system information; and
sending, by the network side, the group of second system information to the terminal based on the first information.

2. The method of claim 1, wherein the receiving condition information of the second system information comprises: a reference signal received power (RSRP) threshold and/or a timing advance (TA) threshold.

3. The method of claim 1 or 2, before sending, by the network side, the first system information to the terminal, further comprising:
receiving a request message of the system information or terminal auxiliary information sent by the terminal.

4. The method of claim 3, wherein the request message of the system information or terminal auxiliary information comprises one or a combination of:
system information requested by the terminal;
an MCS requested by the terminal;
a control channel element (CCE) aggregation level requested by the terminal;
a modulation order request requested by the terminal;
a subcarrier spacing for sending the second system information requested by the terminal;
a sending period for sending the second system information requested by the terminal;
an encrypted mode of the second system information requested by the terminal; and
a number of sending repetitions of the second system information requested by the terminal.

5. The method of claim 3, further comprising:
configuring, by the network side, the first information based on the request message of the system information or the terminal auxiliary information.

6. The method of claim 5, wherein configuring the first information based on the request message of the system information or the terminal auxiliary information comprises:
configuring system information for sending requested by the terminal;
configuring an MCS as a minimum MCS in a plurality of MCSs sent by a plurality of terminals;
configuring a CCE aggregation level as a maximum CCE aggregation level in a plurality of CCE aggregation level requests sent by the plurality of terminals;
configuring a modulation order as a minimum modulation order in a plurality of modulation orders sent by the plurality of terminals;
configuring a subcarrier spacing for sending the second system information requested by the terminal;
configuring a sending period for sending the second system information requested by the terminal;
configuring an encrypted mode of the second system information requested by the terminal; and
configuring a number of sending repetitions for sending the second system information requested by the terminal.

7. A method for receiving system information, comprising:
receiving, by a terminal, first system information sent by a network side, wherein the first system information comprises first information of a group of second system information, and the first information comprises one or a combination of: an indication of a control information aggregation level of the second system information, a number of multiple input multiple output (MIMO) streams of the second system information, a valid area of the second system information, valid time of the second system information, receiving condition information of the second system information, a modulation and coding scheme (MCS) index indicating a modulation and coding scheme of a physical downlink control channel (PDCCH) or a physical downlink shared channel (PDSCH) of the second system information, a modulation mode of the second system information, a subcarrier spacing for sending the second system information, a sending period of the second system information, encrypted information of the second system information, an encrypted public key of the second system information, and a number of sending repetitions of the second system information; and
receiving, by the terminal, the group of second system information sent by the network side based on the first information.

8. The method of claim 7, wherein the receiving condition information of the second system information comprises: a reference signal received power (RSRP) threshold and/or a timing advance, TA, threshold.

9. The method of claim 8, further comprising:
receiving, by the terminal, the second system information when an RSRP measured by the terminal exceeds the RSRP threshold; and/or
receiving, by the terminal, the second system information when a TA of the terminal is lower than the TA threshold

10. The method of any of claims 7 to 9, before receiving, by the terminal, the first system information sent by the network side, further comprising:
sending, by the terminal, a request message of the system information or terminal auxiliary information to the network side.

11. The method of claim 10, wherein the request message of the system information or terminal auxiliary information comprises one or a combination of:
system information requested by the terminal;
an MCS requested by the terminal;
a control channel element (CCE) aggregation level requested by the terminal;
a modulation order request requested by the terminal;
a subcarrier spacing for sending the second system information requested by the terminal;
a sending period for sending the second system information requested by the terminal;
an encrypted mode of the second system information requested by the terminal; and
a number of sending repetitions of the second system information requested by the terminal.

12. The method of claim 10, after sending the request message of the system information or the terminal auxiliary information to the network side, further comprising:
receiving the first information of the group of second system information sent by the network side, entering a connection state when the first system information is not received, and sending the request message of the system information or the terminal auxiliary information to the network side.

13. The method of any of claims 7 to 9, after receiving, by the terminal, the first system information sent by the network side, further comprising:
determining whether to receive the second system information based on the receiving condition information of the second system information in the first information.

14. A network side device, comprising:
a processor, configured to read a program in a memory to execute:
sending first system information to a terminal, wherein the first system information comprises first information of a group of second system information, and the first information comprises one or a combination of: an indication of a control information aggregation level of the second system information, a number of multiple input multiple output (MIMO) streams of the second system information, a valid area of the second system information, valid time of the second system information, receiving condition information of the second system information, a modulation and coding scheme (MCS) index indicating a modulation and coding scheme of a physical downlink control channel (PDCCH) or a physical downlink shared channel (PDSCH) of the second system information, a modulation mode of the second system information, a subcarrier spacing for sending the second system information, a sending period of the second system information, encrypted information of the second system information, an encrypted public key of the second system information, and a number of sending repetitions of the second system information; and
sending the group of second system information to the terminal based on the first information; and
a transceiver, configured to receive and send data in a control of the processor.

15. A network side apparatus, comprising:
a first sending module, configured to send first system information to a terminal, wherein the first system information comprises first information of a group of second system information, and the first information comprises one or a combination of: an indication of a control information aggregation level of the second system information, a number of multiple input multiple output (MIMO) streams of the second system information, a valid area of the second system information, valid time of the second system information, receiving condition information of the second system information, a modulation and coding scheme (MCS) index indicating a modulation and coding scheme of a physical downlink control channel (PDCCH) or a physical downlink shared channel (PDSCH) of the second system information, a modulation mode of the second system information, a subcarrier spacing for sending the second system information, a sending period of the second system information, encrypted information of the second system information, an encrypted public key of the second system information, and a number of sending repetitions of the second system information; and
a second sending module, configured to send the group of second system information to the terminal based on the first information.

16. A terminal, comprising:
a processor, configured to read a program in a memory to execute:
receiving first system information sent by a network side, wherein the first system information comprises first information of a group of second system information, and the first information comprises one or a combination of: an indication of a control information aggregation level of the second system information, a number of multiple input multiple output, MIMO, streams of the second system information, a valid area of the second system information, valid time of the second system information, receiving condition information of the second system information, a modulation and coding scheme (MCS) index indicating a modulation and coding scheme of a physical downlink control channel (PDCCH) or a physical downlink shared channel (PDSCH) of the second system information, a modulation mode of the second system information, a subcarrier spacing for sending the second system information, a sending period of the second system information, encrypted information of the second system information, an encrypted public key of the second system information, and a number of sending repetitions of the second system information; and
receiving the group of second system information sent by the network side based on the first information; and
a transceiver, configured to receive and send data under a control of the processor.

17. A terminal, comprising:
a first receiving module, configured to receive first system information sent by a network side, wherein the first system information comprises first information of a group of second system information, and the first information comprises one or a combination of: an indication of a control information aggregation level of the second system information, a number of multiple input multiple output (MIMO) streams of the second system information, a valid area of the second system information, valid time of the second system information, receiving condition information of the second system information, a modulation and coding scheme (MCS) index indicating a modulation and coding scheme of a physical downlink control channel (PDCCH) or a physical downlink shared channel (PDSCH) of the second system information, a modulation mode of the second system information, a subcarrier spacing for sending the second system information, a sending period of the second system information, encrypted information of the second system information, an encrypted public key of the second system information, and a number of sending repetitions of the second system information; and
a second receiving module, configure to receive the group of second system information sent by the network side based on the first information.

18. A computer-readable storage medium, wherein the computer-readable storage medium having a computer program stored thereon, and the computer program executed by a processor to implement method according to any one of claims 1 to 13.
